# EUROPÄISCHE PATENTSCHRIFT

(11) **EP 0 888 853 B1**
(45) Veröffentlichungstag und Bekanntmachung des Hinweises auf die Patenterteilung: **07.11.2001**
(21) Anmeldenummer: 98110851.7
(22) Anmeldetag: 13.06.1998
(51) Int. Cl.: B25J 9/10, B25J 9/02

(54) **Antrieb für einen vorzugsweise mit antriebbaren Handhabeeinrichtungen versehenen Schlitten, insbesondere Werkzeugwechselschlitten**
Drive for a moving manipulator support , particularly for a tool changing plate
Entrainement d'un support de robot déplaçable , en particulier d'un support de changeur d'outils

(30) Priorität: 02.07.1997 DE 19728159
(43) Veröffentlichungstag der Anmeldung: 07.01.1999
(73) Patentinhaber: Heckert Werkzeugmaschinen GmbH, 09117 Chemnitz (DE)
(72) Erfinder: Pönisch, Achim, Dipl.-Ing., 09573 Erdmannsdorf (DE); Hansch, Stefan, Dr.-Ing., 09227 Einsiedel (DE)
(74) Vertreter: Rumrich, Gabriele

(56) Entgegenhaltungen:
- WO-A-96/31324
- WO-A-97/02931
- DE-A- 4 444 523

## Beschreibung

Die Erfindung betrifft einen Antrieb für einen vorzugsweise mit antreibbaren Handhabeeinrichtungen versehenen Schlitten, insbesondere Werkzeugwechselschlitten, der auf einem verfahrbaren Tragkörper vorzugsweise senkrecht zu dessen Verfahrweg verfahrbar ist, mit zwei Motoren, einem ersten Getriebeelement, das sich entlang des Verfahrwegs des Tragkörpers erstreckt, und einem zweiten Getriebeelement, das um zwei am Tragkörper angeordnete erste Rollen und zwei am Schlitten angeordnete zweite Rollen geführt ist.

Ein bekannter Antrieb mit zwei Achsen und zwei stationären Motoren gemäß WO 96/37346 weist in seiner H-förmigen Variante ein flexibles Übertragungsglied auf, das mit seinen Enden an einem auf einer Fahrbrücke geführten Schlitten angreift und von den zwei stationären Motoren um stationäre Rollen an den Enden des Verfahrwegs der Fahrbrücke und um mitfahrende Rollen an den Enden der Fahrbrücke antreibbar ist. Bei synchronem gegenläufigen Antrieb bewegt sich die Brücke, bei synchronem gleichläufigem Antrieb der Schlitten. Das insbesondere bei großer Brückenspannweite überlange flexible Übertragungsglied besitzt eine geringe Steife, die zu geringer Positioniergenauigkeit und zu Einschränkungen bei den positionierbaren Massen führt. In der kreuzförmigen Antriebsvariante dient das an seinen Enden raumfest fixierte flexible Übertragungsglied nicht dem Antrieb eines auf einer Fahrbrücke geführten Schlittens, sondern dem Antrieb eines auf einem Schlitten verfahrbaren Auslegers.

Ein anderes bekanntes Antriebssystem für einen in zwei Achsen wirkenden Roboter gemäß EP 0 315 310 A1 weist in seiner spezifizierten H-förmigen Variante (einseitig geschlossenes H) einen um stationäre Rollen umlaufenden ersten Antriebsriemen auf, der mit seinen beiden Enden an einer Brücke angreift, um diese mittels eines ersten stationären Motors entlang der Brückenführungen zu verfahren. Ein mit seinen Enden raumfest fixierter zweiter Antriebsriemen ist (entlang des einseitig geschlossenen H) um stationäre Rollen sowie um Rollen der Brücke und eines auf der Brücke geführten Schlittens geführt, um diesen mittels eines zweiten stationären Motors entlang der Schlittenführungen zu verfahren. Auch diese Lösung weist für beide Achsen lange Antriebsriemen auf, die zu den oben erwähnten Nachteilen führen. In der kreuzförmigen Antriebsvariante dient der erste Antriebsriemen dem Antrieb eines Schlittens und der zweite Antriebsriemen dem Antrieb eines auf dem Schlitten verfahrbaren Auslegers.

Beiden bekannten Antrieben ist gemeinsam, daß Baureihen von Brücken-Schlitten-Anordnungen je Verfahrweg eine andere Motor-Gestell-Paarung, d. h., eine andere Motorschnittstelle aufweisen, was zu einer Erhöhung nicht nur des Projektierungsaufwandes, sondern auch der Fertigungstiefe führt.

Der Erfindung liegt die Aufgabe zugrunde, einen Antrieb nach dem Oberbegriff des Anspruches 1 zu schaffen, der eine hohe Steife besitzt, eine gute Synchronisierung der Bewegung der Tragkörperenden ermöglicht und eine baureihenübergreifende Motorschnittstelle aufweist.

Erfindungsgemäß wird diese Aufgabe durch die Merkmale des Anspruchs 1 gelöst. Die hohe Steife wird durch die kurz ausgebildeten ersten und zweiten Getriebeelemente, die baureihenübergreifende Schnittstelle der Motoren durch deren Anordnung auf dem Schlitten realisiert. Das zweite Getriebeelement dient dabei als Antriebselement für den Tragkörper und den Schlitten und einer für hohe Verfahrbeschleunigungen erforderlichen guten Synchronisierung der Bewegung der Enden des Tragkörpers, falls dieser als Brücke ausgebildet ist.

Gemäß einer Ausbildung der Erfindung sind die beiden Stränge des zweiten Getriebeelements zwischen den beiden zweiten Rollen hindurchgeführt oder beide zweite Rollen zwischen diesen Strängen angeordnet, derart, daß bei synchronem gegenläufigen Antrieb beider zweiter Rollen der Schlitten und bei synchronem gleichläufigen Antrieb beider zweiter Rollen der Träger verfahrbar ist. Statt dieser symmetrischen Anordnung ist es jedoch auch möglich, nur einen der beiden Stränge zwischen beiden zweiten Rollen hindurchzuführen, derart, daß bei synchronem gegenläufigen Antrieb beider zweiter Rollen der Träger und bei synchronem gleichläufigen Antrieb beider zweiter Rollen der Schlitten verfahrbar ist.

Gemäß einer weiteren Ausbildung der Erfindung sind beide Getriebeelemente als Zahnriemen und die ersten und zweiten Rollen als Zahnscheiben ausgebildet. Wird für das erste Getriebeelement statt eines zwischen Festpunkten gespannten Zahnriemens eine Zahnstange verwendet, wird die ohnehin große Steife des Antriebs weiter erhöht. Es versteht sich, daß statt der Zahnriementriebe auch andere, vor allem formschlüssige Zugmitteltriebe mit flexiblen Getriebeelementen verwendbar sind.

Die Erfindung wird nachstehend anhand eines Ausführungsbeispiels näher erläutert. Die zugehörige Zeichnung zeigt in schematischer Darstellung einen erfindungsgemäßen Werkzeugwechselschlittenantrieb.

Auf den zueinander parallelen gestellfesten Führungen 2 eines aus mehreren drehbaren Werkzeugtürmen 4' bestehenden Werkzeugmagazins 4 ist eine Brücke 6 in Q-Richtung geführt. Diese trägt Führungen 8, die senkrecht zu den Führungen 2 verlaufen. Auf den Führungen 8 ist in V-Richtung ein Schlitten 10 geführt, der einen als geradgeführten Knickarm ausgebildeten Werkzeugwechselarm 12 trägt, der aus den horizontalen Werkzeugaufnahmen 4" der Werkzeugtürme 4' Werkzeuge 14 entnehmen kann, um diese einer nichtdargestellten Arbeitsspindel einer nichtdargestellten Werkzeugmaschine, beispielsweise eines Fräs-Bearbeitungszentrums, oder einer der Arbeitsspindel zugeordneten nichtdargestellten Handhabeeinrichtung zuzuführen und umgekehrt. Der durch die Bewegungen des Schlittens 10 und des Werkzeugwechselarms 12 bestimmte Werkzeugwechsel muß schnell und mit einer hohen Genauigkeit vonstatten gehen. Die erforderlichen hohen Verfahrbeschleunigungen des Schlittens 10 sind nur bei guter Synchronisation der Bewegung der Brückenenden, die Synchronisation und die Genauigkeit nur bei hoher Steife erreichbar. Deshalb sind statt eines längs einer Brückenführung 2 umlaufenden Zahnriemens erfindungsgemäß zwei an ihren Enden eingespannte und längs beider Brückenführungen 2 angeordnete Zahnriemen 16 und statt eines an seinen Enden fixierten und längs beider Brückenführungen 2 und der Schlittenführungen 8 geführten Zahnriemens erfindungsgemäß ein parallel zu den Schlittenführungen 8 umlaufender endloser Zahnriemen 18 vorgesehen. Jeder Zahnriemen 16 ist um eine am Ende der Brücke 6 angeordnete Zahnscheibe 20 geführt. Der Zahnriemen 18 ist um beide Zahnscheiben 20 und um zwei auf dem Schlitten 10 (in Q-Richtung) nebeneinander angeordnete Zahnscheiben 22 geführt. Diese sind koaxial mit Drehstrom-Servomotoren 24 mit integrierten Absolutwertgebem verbunden. Umschlingungsrollen 26 sichern, daß die Zahnriemen 16 und 18 spielfrei mit den Zahnscheiben 20 bzw. 20 und 22 kämmen. Eine an den Schlitten 10 führende Energiekette 28 gewährleistet die Energieversorgung sowohl für den Werkzeugwechselarm 12 als auch für die Drehstrom-Servomotoren 24. Bei besonders hohen Forderungen an die Steife lassen sich die Zahnriemen 16 durch Zahnstangen ersetzen.

Die Wirkungsweise ist folgende:

Werden beide Drehstrom-Servomotoren 24 mit gleicher Drehzahl aber entgegengesetztem Drehsinn angesteuert, z. B. die linke Zahnscheibe 22 entgegen und die rechte Zahnscheibe 22 mit dem Uhrzeigersinn, klettert der Schlitten 10 an dem unbeweglichen Zahnriemen 18 nach oben, indem auf diesem beide Zahnscheiben 22 abrollen. Wird der Drehsinn beider Drehstrom-Servomotoren 24 geändert, klettert der Schlitten 10 auf gleiche Weise an dem unbeweglichen Zahnriemen 18 nach unten. Der auf dem Schlitten 10 angeordnete Werkzeugwechselarm 12 kann so zwischen den Etagen des Werkzeugmagazins 4 bewegt werden. Werden beide Drehstrom-Servomotoren 24 mit gleicher Drehzahl und gleichem Drehsinn angesteuert, z. B. im Uhrzeigersinn, fährt die Brücke 6 nach links, indem die durch den Zahnriemen 18 gedrehten Zahnscheiben 20 auf den festen Zahnriemen 16 abrollen. Wird der Drehsinn beider Drehstrom-Servomotoren 24 geändert, fährt die Brücke 6 auf gleiche Weise nach rechts. Der auf dem Schlitten 10 angeordnete Werkzeugwechselarm 12 kann so zwischen den Türmen des Werkzeugmagazins 4 bewegt werden. Diese Grundbewegungen lassen sich durch Drehzahldifferenzen zwischen beiden Drehstrom-Servomotoren 24 zu schrägen und anderen Bewegungen kombinieren. Der Schlitten 10 bildet so einen Flächenroboter. Der Zahnriemen 18 dient dabei erstens als Antriebselement für die Brücke 6, zweitens zur Synchronisierung der Bewegung der Brückenenden und drittens als Antriebselement für den Schlitten 10, der seinerseits die zentrale Antriebseinheit bildet.

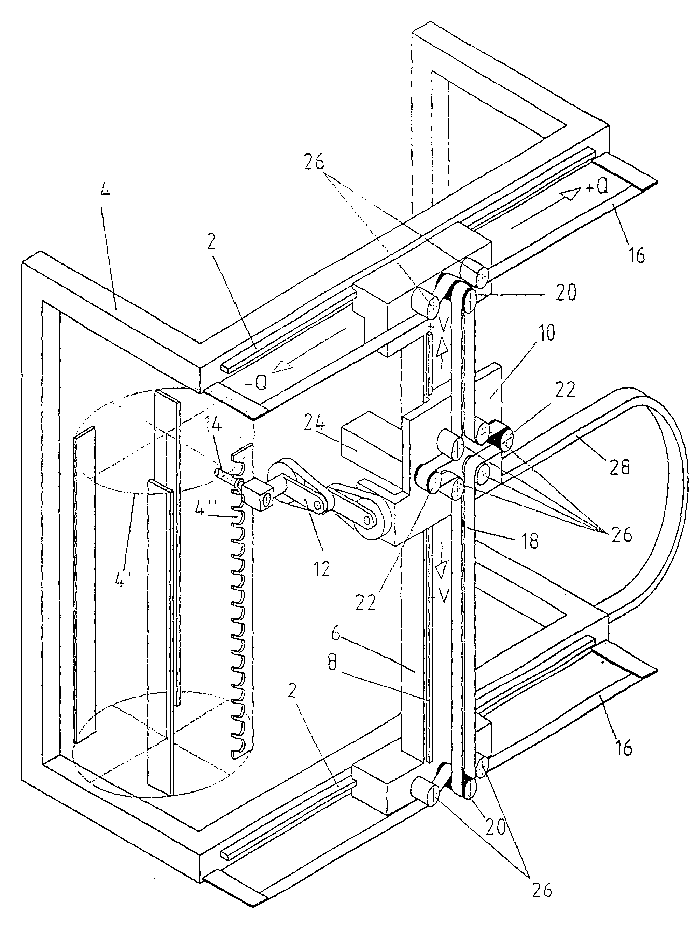

## Patentansprüche

1. Antrieb für einen vorzugsweise mit antreibbaren Handhabeeinrichtungen (12) versehenen Schlitten (10), insbesondere Werkzeugwechselschlitten, der auf einem verfahrbaren Tragkörper (6) vorzugsweise senkrecht zu dessen Verfahrweg verfahrbar ist, mit zwei Motoren (24), wenigstens einem ersten Getriebeelement (16), das sich entlang des Verfahrwegs des Trägkörpers (6) erstreckt, und einem zweiten Getriebeelement (18), das um zwei am Tragkörper (6) angeordnete erste Rollen (20) und zwei am Schlitten (10) angeordnete zweite Rollen (22) geführt ist,
**dadurch gekennzeichnet, daß**
- das erste Getriebeelement (16) nichtumlaufend ausgebildet ist und mit einer ersten Rolle (20) kämmt und
- das zweite Getriebeelement (18) endlos ausgebildet und durch die zwei zweiten Rollen (22) antreibbar ist, wobei
- die ersten Rollen (20) an den Enden des Verfahrwegs des Schlittens (10) angeordnet sind und die zweiten Rollen (22) mit je einem der zwei Stränge des zweiten Getriebeelements (18), die sich zwischen den beiden ersten Rollen (20) ausbilden, kämmen und durch je einen der beiden am Schlitten (10) angeordneten Motoren (24) antreibbar sind.

2. Antrieb nach Anspruch 1, **dadurch gekennzeichnet, daß** der Tragkörper (6) als Brücke ausgebildet ist, deren an den Enden angeordnete erste Rollen (20) mit je einem von zwei parallel zueinander verlaufenden ersten Getriebelementen (18) kämmen.

3. Antrieb nach Anspruch 1 oder 2, **dadurch gekennzeichnet, daß** die beiden Stränge des zweiten Getriebeelements (18) zwischen beiden zweiten Rollen (22) hindurchgeführt oder beide zweite Rollen (22) zwischen diesen Strängen angeordnet sind, derart, daß bei synchronem gegenläufigen Antrieb beider zweiter Rollen (22) der Schlitten (10) und bei synchronem gleichläufigen Antrieb beider zweiter Rollen (22) der Tragkörper (6) verfahrbar ist.

4. Antrieb nach einem der Ansprüche von 1 bis 3, **dadurch gekennzeichnet, daß** die ersten Getriebeelemente (16) als zwischen Festpunkten gespannte endliche Zahnriemen oder als Zahnstangen und das zweite Getriebelement (18) als Zahnriemen ausgebildet sind.

5. Antrieb nach einem der Ansprüche von 1 bis 4, **dadurch gekennzeichnet, daß** den ersten und zweiten Rollen (20 bzw. 22) jeweils wenigstens eine dritte Rolle (26) zugeordnet ist, mit der die Getriebeelemente spannbar und/oder an die ersten und zweiten Rollen (20 bzw. 22) anlegbar sind.

## Claims

1. Drive for a slide (10) preferably provided with driveable manipulating devices (12), in particular a tool changing slide, which is displaceable on a displaceable carrier (6), preferably perpendicularly to its displacement path, with two motors (24), at least one first transmission element (16) which extends along the displacement path of the carrier (6), and a second transmission element (18) which is guided around two first rollers (20) arranged on the carrier (6) and two second rollers (22) arranged on the slide (10), **characterised in that**
- the first transmission element (16) is embodied so that it does not go round and meshes with a first roller (20) and
- the second transmission element (18) is embodied so that it is endless and can be driven by the two second rollers (22),
the first rollers (20) being arranged at the ends of the displacement path of the slide (10) and the second rollers (22) each meshing with one of the two segments of the second transmission element (18) which form between the two first rollers (20), and each being driveable by one of the two motors (24) arranged on the slide (10).

2. Drive according to claim 1, **characterised in that** the carrier (6) is embodied as a bridge the first rollers (20) of which arranged at the ends each mesh with one of two first transmission elements (18) running parallel to one another.

3. Drive according to claim 1 or 2, **characterised in that** the two segments of the second transmission element (18) are passed through between the two second rollers (22) or the two second rollers (22) are arranged between these segments such that the slide (10) is displaceable when the two second rollers (22) are driven synchronously in opposite directions, and the carrier (6) is displaceable when the two second rollers (22) are driven synchronously in the same direction.

4. Drive according to one of claims 1 to 3, **characterised in that** the first transmission elements (16) are embodied as endless toothed belts stretched between fixed points or as toothed racks and the second transmission element (18) is embodied as a toothed belt.

5. Drive according to one of claims 1 to 4, **characterised in that** the first and second rollers (20 and 22 respectively) each co-operate with at least one third roller (26) with which the transmission elements can be tensioned and/or laid against the first and second rollers (20 and 22 respectively).

## Revendications

1. Entraînement d'un coulisseau (10) portant de préférence des dispositifs de manipulation (12) entraînables, en particulier un coulisseau de changement d'outil pouvant par l'intermédiaire d'un corps porteur (6) mobile, se déplacer de préférence perpendiculairement à la course de déplacement de ce corps, équipé de deux moteurs (24), d'au moins un premier élément d'entraînement (16) disposé le long de la course de déplacement du corps porteur (6) et d'un second élément d'entraînement (18), circulant autour de deux premiers galets (20) montés sur le corps porteur (6) et de deux seconds galets (22) montés sur le coulisseau (10)
**caractérisé en ce que**
- le premier élément d'entraînement (16) n'est pas à boucle fermée et engrène avec un premier galet (20),
- le second élément d'entraînement (18) est sans fin et peut être entraîné par les deux seconds galets (22),
- les premiers galets (20) sont montés aux extrémités de la course de déplacement du coulisseau (10), tandis que les seconds galets (22) engrènent chacun avec l'un des deux brins du second élément d'entraînement (18) qui circulent entre les deux premiers galets (20), et sont entraînés chacun par un des deux moteurs (24) montés sur le coulisseau (10),

2. Entraînement selon la revendication 1,
**caractérisé en ce que**
le corps porteur (6) a la forme d'un pont portant à ses extrémités les premiers galets (20) qui engrènent chacun avec l'un des deux premiers éléments d'entraînement (16) parallèles entre eux.

3. Entraînement selon l'une quelconque des revendications 1 ou 2,
**caractérisé en ce que**
les deux brins du second élément d'entraînement (18) passent entre deux seconds galets (22), ou deux seconds galets (22) sont montés entre ces brins de manière qu'un entraînement synchrone en sens inverse des deux seconds galets (22) permet de déplacer le coulisseau (10) et qu'un entraînement synchrone dans le même sens des deux seconds galets (22) permet de déplacer le corps porteur (6).

4. Entraînement selon l'une quelconque des revendications 1 à 3,
**caractérisé en ce que**
les premiers éléments d'entraînement (16) sont des courroies crantées limitées tendues entre des points fixes, ou des crémaillères, et le second élément d'entraînement (18) est une courroie crantée sans fin.

5. Entraînement selon l'une quelconque des revendications 1 à 4,
**caractérisé en ce qu'**
aux premiers et aux seconds galets (20 ou 22) est associé chaque fois au moins un troisième galet (26) qui permet de tendre les éléments d'entraînement et/ou de les appliquer sur les premiers et seconds galets (20 ou 22).
